Europäisches Patentamt

European Patent Office

Office européen des brevets

(11) Veröffentlichungsnummer: **0 317 767 B1**

(12) **EUROPÄISCHE PATENTSCHRIFT**

(45) Veröffentlichungstag der Patentschrift: **22.01.92**

(21) Anmeldenummer: **88117541.8**

(22) Anmeldetag: **21.10.88**

(51) Int. Cl.⁵: **B60S 1/32**

(54) **Scheibenwischeranordnung.**

(30) Priorität: **31.10.87 DE 3737040**

(43) Veröffentlichungstag der Anmeldung:
**31.05.89 Patentblatt 89/22**

(45) Bekanntmachung des Hinweises auf die
Patenterteilung:
**22.01.92 Patentblatt 92/04**

(84) Benannte Vertragsstaaten:
**BE DE FR GB IT**

(56) Entgegenhaltungen:
**FR-A- 2 490 565**
**FR-A- 2 586 218**
**GB-A- 790 775**

(73) Patentinhaber: **DEERE & COMPANY**
**1 John Deere Road**
**Moline, Illinois 61265(US)**

(72) Erfinder: **von Meltzing, Wolfgang**
**Schweizertalstrasse 15**
**W-6653 Bierbach(DE)**
Erfinder: **Gunther, Michel**
**Lotissement du Stade**
**F-57600 Morsbach(FR)**
Erfinder: **Magin, Ludwig**
**Keltenstr. 22**
**W-6707 Schifferstadt(DE)**

(74) Vertreter: **Feldmann, Bernhard et al**
**DEERE & COMPANY European Office, Patent**
**Department Steubenstrasse 36-42 Postfach**
**503**
**W-6800 Mannheim 1(DE)**

EP 0 317 767 B1

## Beschreibung

Die Erfindung betrifft eine Scheibenwischeranordnung mit einem **einzigen** Wischblatt und einem Gestänge, die über einen Halter miteinander verbunden sind.

Eine derartige Scheibenwischeranordnung ist aus der DE-B-1 031 660 bereits bekannt geworden, wobei deren Wischblatt stets senkrecht zu der zu reinigenden Scheibe gehalten wird. Allerdings wird das Wischblatt zur Verstellung auf dem Wischarm in dessen Längsrichtung auf einer Kurvenbahn verschoben. Außerdem ist zur Längsverschiebung des Wischblatts eine Führungsstange erforderlich.

Bei dieser Scheibenwischeranordnung ist deshalb zu befürchten, daß bei Korrosion und Verschmutzung die Schiebeverbindung klemmt.

Eine in der FR-A-2 490 565 offenbarte Scheibenwischeranordnung umfaßt stets zwei Wischerblätter, die mit einem seitlichen Abstand zueinander angeordnet sind, zwischen sich ein Schwenklager tragen und über dieses an einem einzigen oder an zwei Wischarmen angreifen. Eine zu dem Krümmungsmittelpunkt der Scheibe stets radial ausgerichtete Haltung der Wischerblätter ergibt sich dadurch, daß sich beide Wischerblätter stets aufeinander seitlich abstützen und aufgrund ihrer gelenkigen Anordnung auf der Scheibe aufsitzen können. Diese Scheibenwischeranordnung setzt aber stets das Vorhandensein zweier parallel zueinander angeordneter Wischerblätter voraus. Hierin wird ein Nachteil gesehen, weil diese sowohl anfängliche wie auch stets wiederkehrende Kosten verursachen.

Des weiteren ist aus der DE-A-22 33 438 eine Scheibenwischeranordnung bekannt, bei der das Wischblatt ebenfalls in einer Richtung quer zur Längsachse des Wischarms beweglich ist. Eine derartige Bewegung wird aufgrund eines Kugelgelenks nur ermöglicht, jedoch nicht gesteuert.

Andere Scheibenwischeranordnungen (CH-C-244 749) sind in der Kraftfahrzeugtechnik weithin bekannt und weisen in besonderen Fällen eine Parallelführung auf, die es ihnen ermöglicht, eine große und insbesondere rechteckförmige Fläche zu reinigen.

Ein Nachteil der letztgenannten Scheibenwischeranordnungen ist aber darin zu sehen, daß sie ein gutes Wischergebnis nur dann erbringen, wenn die zu reinigende Scheibe eben oder nahezu eben ist. Bei gekrümmten Scheiben steht das Wischblatt ab einem bestimmten Wischwinkel nicht mehr radial oder senkrecht auf der Scheibe und wird nur noch über die Scheibe gezogen, ohne Wasser mitzunehmen.

Die der Erfindung zugrunde liegende Aufgabe wird darin gesehen, eine Scheibenwischeranordnung zu entwickeln, deren Wischblatt stets auf seiner gesamten Länge senkrecht auf einer gekrümmten Scheibe geführt wird, wobei ein hohes Maß an Zuverlässigkeit und eine einfache Ausführung erreicht werden sollen.

Diese Aufgabe ist durch die erfindungsgemäße Lehre des Patentanspruchs 1 gelöst worden, wobei in den weiteren Patentansprüchen vorteilhafte Weiterentwicklungen dieser Lehre angegeben sind.

Aufgrund der erfindungsgemäßen Lehre wird das Wischblatt mittels eines Gelenks an dem Halter und somit an der Parallelführung gehalten und mit dessen Gelenkwelle verschwenkt, so daß Reibungsprobleme, wie sie beim Stand der Technik zu befürchten sind, ausbleiben. Zudem bleibt die Länge des Scheibenwischerzusammenbaus über das gesamte Wischfeld unverändert, da sich das Wischblatt nicht in der Richtung seiner Längsachse verschiebt.

Die Steuerung der Neigung des Wischblatts in bezug auf die Scheibe kann auf mehrere Arten erfolgen. Eine Möglichkeit sieht vor, das Wischblatt beweglich an dem Halter aufzuhängen und seine Neigung mittels einer Verbindungskette, die einenends an einem ortsfesten Lager und anderenends entweder an der Gelenkwelle, die dann drehfest mit dem Wischblatt verbunden ist, oder an dem Wischblatt direkt, angeschlossen ist, zu steuern. Zur Halterung und Winkelbeweglichkeit dieser Verbindungskette, die aus einem Verbindungsglied und einem Universalgelenk bestehen kann, ist an dem Gestänge eine Lasche oder dergleichen und zwischen dem Verbindungsglied und der Gelenkwelle ein Universalgelenk vorgesehen. Damit das Verbindungsglied die verschiedensten Stellungen des Wischarmes mitverfolgen kann, ist es zweckmäßig, wenn sich zwischen ihm und einem ortsfesten Lager ein längenveränderliches Steuerglied, insbesondere eine Spiralfeder, ein Gummizug oder dergleichen erstreckt. Desgleichen kann das Steuerglied auch als reines Teleskopgestänge ausgebildet sein oder einfach aus zwei Teilen bestehen, die gegeneinander verschiebbar sind. Ist das Steuerglied jedoch elastisch ausgebildet, dann wird als positiver Nebeneffekt erzielt, daß das Wischblatt mit einem geringeren Kraftaufwand wieder aus jeder seiner Endstellungen zurückgeholt werden kann.

Die Neigung des Wischblatts kann durch die Änderung verschiedener Abmessungen, insbesondere den Abständen der Anlenkpunkte des Steuerglieds, geändert werden.

Eine weitere hervorragende Reinigung des Wischfeldes wird erreicht, wenn das Wischblatt mittels eines als Parallelogramm ausgebildeten Gestänges mit seiner Längsachse stets parallel verschoben wird, was bedeutet, daß es auch stets parallel zu der Krümmungsachse der Scheibe steht.

Aufgrund der Parallelführung des Wischblattes stets parallel zu der Längsachse der Wölbung findet auch beim Übergang in die Wölbung keine Punkt- sondern eine Linienberührung statt.

Nach einer anderen Möglichkeit wird die Neigung des Wischblatts zur Scheibe über die relative Stellung des Gestänges zu dem Halter gesteuert, wobei hierzu das Gestänge als Parallelogrammgestänge ausgeführt ist. Dies hat den Vorteil, daß relativ wenige Teile erforderlich sind. Abhängig davon, ob es sich um eine konvex oder um eine konkav gekrümmte Scheibe handelt, ist die Stelle, an der diese relative Stellung abgenommen wird, festzulegen. Es ist zudem möglich, die Neigung mehr oder weniger stark einzustellen, indem die Entfernung zwischen dem Lagerpunkt Parallelführungsgestänge-Halter und der Abnahmestelle verändert wird.

In der Zeichnung sind zwei nachfolgend näher beschriebene Ausführungsbeispiele der Erfindung dargestellt. Es zeigt:

Figur 1     eine erstes Ausführungsbeispiel einer erfindungsgemäßen Scheibenwischeranordnung in schematischer Darstellung und in Seitenansicht,

Figur 2     die Scheibenwischeranordnung aus Figur 1 in Draufsicht in Verbindung mit einer gewölbten Scheibe,

Figur 3     einen Ausschnitt aus Figur 2 im Bereich der Berührung eines Wischblatts mit der Scheibe in vergrößerter Darstellung,

Figur 4     die Scheibenwischeranordnung aus den Figuren 1 und 2 in Vorderansicht und in einer Endstellung,

Figur 5     einen Teil der Scheibenwischeranordnung mit einem Universalgelenk, in vergrößerter und gegenständlicher Darstellung,

Figur 6     die Scheibenwischeranordnung mit einem anderen Universalgelenk als dem in Figur 5 dargestellten,

Figur 7     ein zweites Ausführungsbeispiel der erfindungsgemäßen Scheibenwischeranordnung mit einer Schwenkverbindung zwischen einem Gestänge und dem Wischblatt und

Figur 8     die Scheibenwischeranordnung aus Figur 7 mit einer anderen Schwenkverbindung.

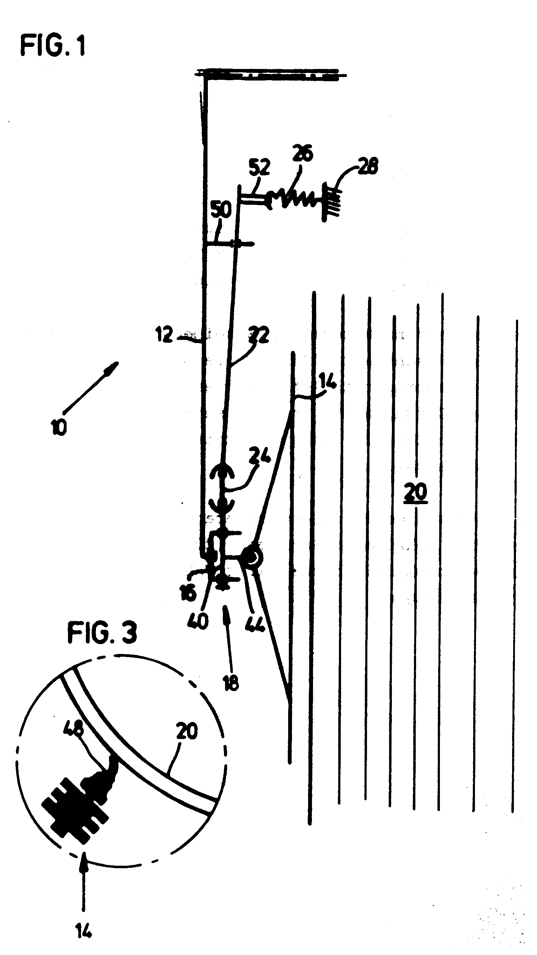

Eine erfindungsgemäße Scheibenwischeranordnung 10 setzt sich im wesentlichen aus einem Gestänge 12, einem Wischblatt 14, einem Halter 16 und einem Gelenk 18 zusammen und ist dazu bestimmt, die Oberfläche einer konvex gekrümmten Scheibe 20 zu reinigen. In einer ersten Ausführungsart zum Steuern der Neigung des Wischblatts 14 in bezug auf die Scheibe 20, wie sie in den Figuren 1 bis 6 dargestellt ist, gehört zu der Scheibenwischeranordnung 10 im wesentlichen noch ein Zwischenglied 22, ein Universalgelenk 24 und ein Steuerglied 26, das an einem ortsfesten Lager 28 angreift.

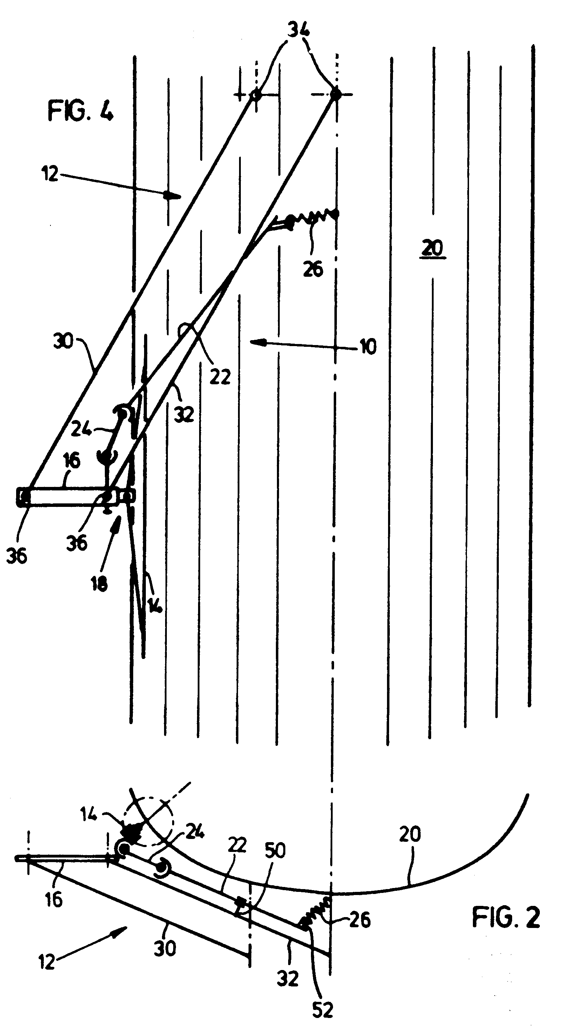

Das Gestänge 12 kann sowohl als einarmiger Wischarm wie auch als Parallelogrammgestänge ausgebildet sein. Als einziger funktioneller Unterschied ist lediglich zu sehen, daß sich bei einem gewöhnlichen Wischarm das Wischblatt nicht parallel verschiebt, sondern stets um eine Antriebswelle schwenkt. In beiden Ausführungsbeispielen wird jedoch von einem Parallelogrammgestänge ausgegangen, da es als weiterer Vorteil die Reinigung eines größeren und insbesondere rechteckförmigen Feldes ermöglicht. Das Gestänge 12 besteht, wie dies insbesondere aus Figur 2 hervorgeht, aus zwei Lenkern 30 und 32, die an ihren oberen Endbereichen an Lagerpunkten 34 aufgehängt sind und von denen mindestens einer auf nicht gezeigte Weise von einem Scheibenwischermotor aus angetrieben wird, wobei die Scheibenwischermotorwelle in Figur 1 nur angedeutet ist. An ihren unteren Endbereichen greifen die beiden Lenker 30, 32 in Lagerpunkten 36 an dem Halter 16 schwenkbar an. Nachdem die Abstände zwischen den unteren und den oberen Lagerpunkten 34 und 36 jeweils gleich sind, handelt es sich um eine Parallelogrammführung, die bewirkt, daß sowohl der Halter 16 als auch das Wischblatt 14 stets nur parallel verschoben wird.

Das Wischblatt 14 ist von herkömmlicher Bauart und wird lediglich in Ausnahmefällen in bezug auf seine Verbindung mit dem Halter 16 angepaßt.

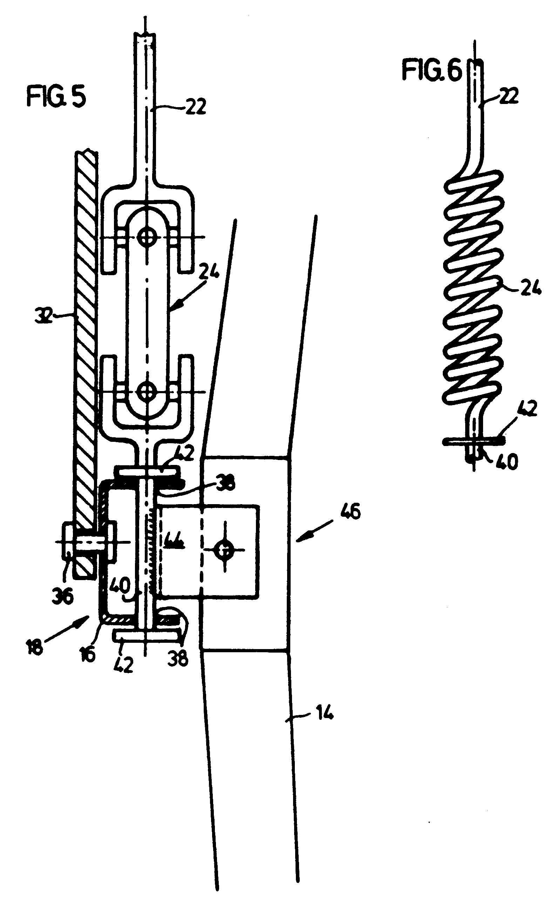

Der Halter 16 ist von der Seite gesehen als ein - U - ausgebildet, das zu dem Wischblatt 14 hin offen ist. Insbesondere aus Figur 5 geht hervor, daß der Halter 16 über einen einen unteren Lagerpunkt 36 bildenden Niet oder eine Schraube an dem Lenker 32 schwenkbar angreift. Die Verbindung zwischen dem Halter 16 und dem Gestänge 12 ist so beschaffen, daß diese gemeinsam auch eine begrenzte vertikale Schwenkbewegung, d. h. mit Blick auf Figur 1 in der Zeichenebene, ausführen können.

Das Gelenk 18 geht als bewegliche Verbindung zwischen dem Lenker 32 und dem Wischblatt 14 aus dem Halter 16 hervor. In der Längsrichtung des Wischblatts 14 sind in den Halter 16 im Bereich des Lenkers 32 zwei Bohrungen 38 eingebracht, die von einer Gelenkwelle 40 durchsetzt werden. Die Gelenkwelle 40 weist in ihren Endbereichen Anschläge 42 auf, die ihre Axialbewegung begrenzen. Zwischen diesen Anschlägen 42 und innerhalb des - U - gelegen, ist an die Gelenkwelle 40 ein Bügel 44 angebracht, und zwar bevorzugt angeschraubt, der sich bis zu einem Steg 46 in dem Wischblatt 14 erstreckt und dieses somit schwenkbeweglich aufnimmt. Sollte der Bügel 44 an die Gelenkwelle 40 angeschweißt sein, dann ist es vorteilhaft, eine der Bohrungen 38 radial offen zu halten, damit die Gelenkwelle 40 in das Gelenk 18 leicht eingesetzt werden kann. Das Wischblatt 14 kann demnach in bezug auf den Bügel 44 schwenken, und zwar mit Blick auf die Figuren 1 und 5 in der Zeichenebene, es kann mit dem Bügel 44 und der Gelenkwelle 40 um eine durch die Bohrungen 38 verlaufende Achse schwenken, d. h. mit Bezug auf Figur 5 in die Zeichenebene hinein oder aus dieser heraus, und es kann sich mit dem Bügel 44, der Gelenkwelle 40 und dem Halter 16 in einer Ebene, die zu der Zeichenebene der Figur 5 senkrecht steht, gegenüber dem Lenker 32 bewegen.

Die Scheibe 20 ist, wie es in Figur 2 dargestellt ist, mit einem annähernd konstanten Radius gekrümmt und erstreckt sich über annähernd 180 Winkelgrade. Derartige Scheiben 20 finden sich z. B. bei Einmannkabinen und Fahrerkabinen von Mähdreschern, Häckslern, Traktoren, Erdbewegungsmaschinen oder dergleichen, und zwar weil es dort insbesondere auf eine gute Rundumsicht ankommt. Die Krümmung der Scheibe 20 erfolgt um eine nicht dargestellte Krümmungs- oder Hochachse, und man erkennt insbesondere in Figur 3, daß sich das Wischblatt 14 mit seiner Wischlippe 48 im wesentlichen radial zu dieser Krümmungsachse erstreckt.

Das Zwischenglied 22 wird von einer einfachen Stange aus Kunststoff oder Stahl gebildet, an deren unteren Ende das Universalgelenk 24 angreift, die in ihrem oberen Endbereich in einer an dem Lenker 32 befestigten Lasche 50 längsbeweglich geführt ist und von deren oberen Endbereich radial eine Zunge 52 in Richtung auf die Scheibe 20 bzw. auf das ortsfeste Lager 28 absteht.

Das Universalgelenk 24 ist so ausgebildet, daß es unterschiedliche Winkel zwischen der Gelenkwelle 40, die stets senkrecht zu der Längsachse des Halters 16 verläuft, und dem Zwischenglied 22 zuläßt, dessen relative Lage zu der Gelenkwelle 40 sich in Abhängigkeit von dem Wischwinkel der Scheibenwischeranordnung 10, d. h. deren Gestänge 12, ändert. Hierzu ist im Einzelnen eine Ausbildung des Universalgelenks 24 als Kardan- oder Doppelkardangelenk (s. Fig. 5), als drehfeste Feder (s. Fig. 6) oder als in das Zwischenglied 22 integrierter Biegestab angebracht. Die Verbindung zwischen der Gelenkwelle 40 und dem Zwischenglied 22 hält das Zwischenglied 22 in bezug auf seine Längsachse fest, wobei es allerdings innerhalb geringer Grenzen und in Abhängigkeit von dem Wischwinkel in der Lasche 50 auf- und abbewegbar ist. Es ist dabei vom Wesen der Erfindung unabhängig, wie das Universalgelenk 24 mit dem Zwischenglied 22 und der Gelenkwelle 40 verbunden ist; vorteilhaft ist jedenfalls eine lösbare Verbindung, wenn dies auch in der Zeichnung der Einfachheit wegen nicht dargestellt ist. Es ist auch denkbar, das Universalgelenk 24 gegenüber dem Zwischenglied 22 und/oder der Gelenkwelle 40 axial beweglich zu halten und das Zwischenglied 22 in der Lasche 50 axial festzulegen.

Das Steuerglied 26 ist in diesem Ausführungsbeispiel elastisch ausgebildet, was aber nicht zwingend ist. Vielmehr ist es ausreichend, wenn es längenveränderlich ist, was etwa durch eine teleskopartige Verbindung oder durch eine Verbindung mit zwei in Längsrichtung gegeneinander verschiebbaren Teilen erreichbar ist. Die Längenänderbarkeit ermöglicht, daß sich das Zwischenglied 22 während des Überstreichens des Wischfeldes mehr oder weniger weit von dem ortsfesten Lager 28 wegbewegen kann, dabei aber seine Steuerfunktion, nämlich das Drehen des Zwischenglieds 22 in Abhängigkeit von dem Wischwinkel wahrnimmt. Die Verwendung eines elastischen Steuergliedes 26 hat jedoch noch einen weiteren Vorteil, der weiter unten erläutert wird.

Die Elastizität des Steuerglieds 26 wird durch seine Ausbildung als eine herkömmliche Stahl-Spiralfeder erzielt, die einenends in das ortsfeste Lager 28 und anderenends in die Zunge 52 eingehängt ist. Allerdings kann anstatt der Stahl-Spiralfeder auch ein Gummizug oder dergl. herangezogen werden. Unabhängig von der Verwendung eines elastischen Steuerglieds 26 ist selbstverständlich in dem Gestänge 12 wie bei jeder herkömmlichen Scheibenwischeranordnung nochmals eine nicht gezeigte Feder vorhanden, die das Wischblatt 14 stets an die Scheibe 20 drückt. Jedenfalls befindet sich das Steuerglied 26 stets in einem mehr oder weniger gespannten Zustand, wobei die Spannung am geringsten ist, wenn sich die Scheibenwischeranordnung 10 in ihrer Mittenlage befindet. Je weiter sich das Gestänge 12 und das Wischblatt 14 in Richtung auf eine ihrer Endstellungen bewegen, desto mehr wird das Steuerglied 26 gespannt, wie unschwer auch aus den Figuren 1 und 4 zu erkennen ist, so daß der Druck des Wischblatts 14 auf die Scheibe 20 etwas reduziert wird. Dieser Vorgang hat als vorteilhaften und unerwarteten Nebeneffekt inne, daß bei der Bewegungsumkehr des Gestänges 12 in Richtung auf die Mittenlage der Scheibenwischermotor nicht übermäßig belastet wird, um das Wischblatt 14 und das Gestänge 12 in die Mittenlage zurückzuholen.

Das ortsfeste Lager 28 ist ein Befestigungspunkt am Rahmen der Scheibe 20 oder an der Scheibe 20 selbst, der einen vorbestimmten, aber dennoch veränderbaren Abstand zu der angedeuteten Scheibenwischermotorwelle aufweist.

Aus dem Vorstehenden ergibt sich nunmehr folgende Funktion der erfindungsgemäßen Scheibenwischeranordnung 10 nach einer ersten Ausführungsart zur Steuerung des Wischblatts 14.

Es wird für den Zweck der folgenden Beschreibung von einem Zustand ausgegangen, in dem sich die Scheibenwischeranordnung 10 in ihrer Mittenlage, also mittig zwischen den beiden Umkehrstellungen befindet. In dieser Mittenlage bilden die Lagerpunkte 34 und 36 ein Rechteck, die Lenker 30 und 32, sowie das Zwischenglied 22 verlaufen parallel zu der Krümmungsachse der Scheibe 20, das Universalgelenk 24 ist in keiner Richtung angewinkelt und das Steuerglied 26 befindet sich in dem Zustand seiner geringsten Spannung und erstreckt sich in einer Richtung radial zur Krümmungsachse der Scheibe 20.

Ausgehend von dieser Mittenlage in Richtung auf die in Figur 4 gezeigte Umkehrstellung verschwenkt das Gestänge 12 im Uhrzeigerdrehsinn (s. Fig. 4), so daß sich der Abstand zwischen der Gelenkwelle 40 und dem ortsfesten Lager 28 vergrößert. Diese Längenänderung wird von dem Steuerglied 26 kompensiert, das aufgrund seiner inneren Spannkraft eine gestreckte Linie mit der Zunge 52 aufrecht erhält und sich dabei in seiner Länge verändert, und da die Zunge 52 starr mit dem Zwischenglied 22 verbunden ist, verschwenkt dieses um seine Längsachse. Die seitliche Verschiebung des Gestänges 12 in bezug auf die Mittenlage führt auch zu einer Änderung des Winkels des Zwischenglieds 22 zu dem Halter 16 und der Gelenkwelle 40, die von dem Universalgelenk 24 aufgefangen wird. Die Schwenkbewegung des Zwischenglieds 22 wird über das Universalgelenk 24 auf die Gelenkwelle 40 übertragen, die starr mit dem Bügel 44 verbunden ist und deshalb das Wischblatt 14 um die Längsachse der Gelenkwelle 40 verschwenkt. Das Maß des Verschwenkens ist so bemessen, daß das Wischblatt 14 mit seiner Wischlippe 48 senkrecht auf der Scheibe 20 steht und radial zu der Krümmungsachse verläuft. Durch die Änderung des Abstands zwischen dem ortsfesten Lager 28 und der Scheibenwischermotorwelle, also dem Schwenkzentrum der Scheibenwischeranordnung 10 kann das vorgenannte Maß, d. h. der Winkel zwischen dem Wischblatt 14 und der Oberfläche der Scheibe 20 variiert werden. Wäre das Gestänge 12 als ein einfacher Wischarm ohne Parallelführung ausgebildet, dann würde sich der Halter 16 um den in Figur 4 rechts gelegenen Lagerpunkt 36 drehen und sich nach dem Zwischenglied 22 ausrichten; eine Verdrehung des Zwischenglieds 22 würde aufgrund der radialen Anlenkung des Steuerglieds 26 und der Zunge 52 an dem Zwischenglied 22 aber dennoch stattfinden.

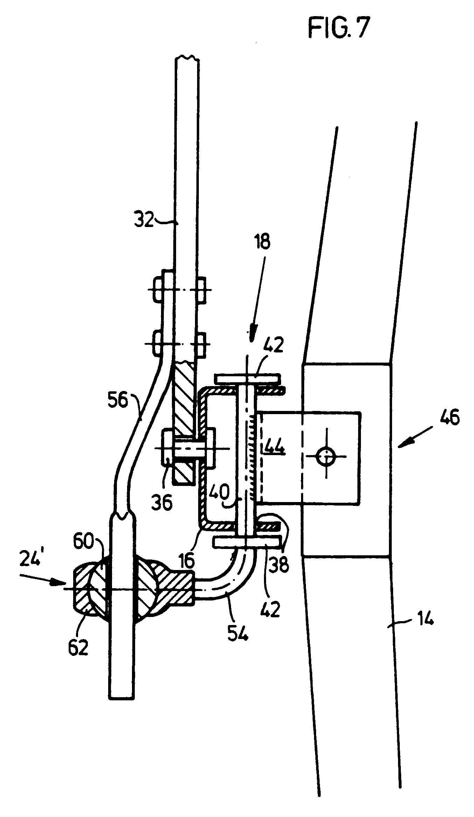

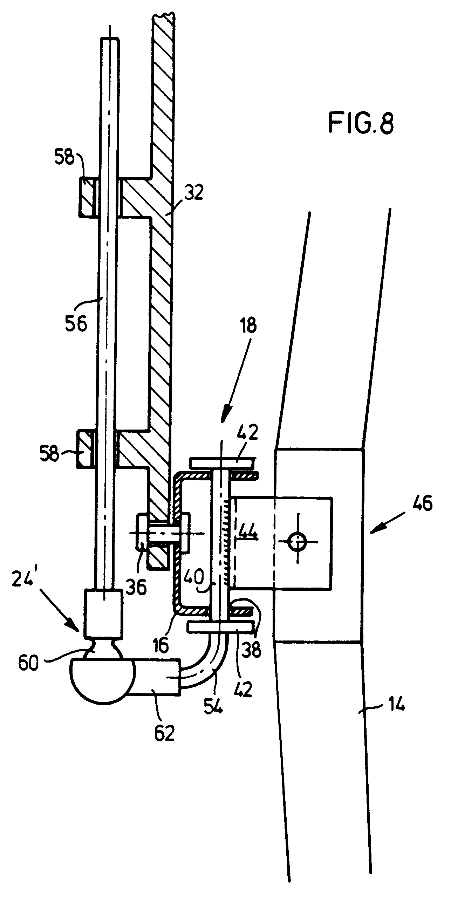

In einer zweiten Ausführungsart zum Steuern der Neigung des Wischblatts 14 in bezug auf die Scheibe 20, wie sie in den Figuren 7 und 8 dargestellt ist, gehört zu der Scheibenwischeranordnung 10 ein Hebel 54 und eine Verlängerung 56 eines der Lenker 30, 32, in diesem Ausführungsbeispiel des Lenkers 32, wobei am Ende des Hebels 54 wiederum ein Universalgelenk 24' vorgesehen ist. Bei dieser zweiten Ausführungsart wird stets von einer Ausbildung des Gestänges 12 als Parallelführungsgestänge ausgegangen.

Das Zwischenglied 22, das bisherige Universalgelenk 24, das Steuerglied 26, das ortsfeste Lager 28, die Lasche 50 und die Zunge 52 entfallen bei dieser Ausführungsart.

Der Hebel 54 ist an dem unteren Ende der Gelenkwelle 40 drehfest angebracht, z. B. geschweißt; die Gelenkwelle 40 ist ansonsten unverändert. Gegebenenfalls könnte der Hebel 54 auch als eine Fortsetzung der Gelenkwelle 40 betrachtet bzw. ausgeführt werden. Der Hebel 54 erstreckt sich radial von der Gelenkwelle 40 weg bis über den Lenker 32 hinaus.

Die Verlängerung 56 des Lenkers 32 kann als ein auf den unteren Endbereich des Lenkers 32 starr aufgesetzter Stab ausgebildet sein, der sich in der Richtung der Längsachse des Lenkers 32 bis über den Hebel 54 hinaus erstreckt. Es sind verschiedene Ausführungsarten der Verlängerung 56 denkbar, z. B., wie es in Figur 7 gezeigt ist, indem ein Stab im Endbereich des Lenkers 32 aufgenietet und in Richtung vom Wischblatt 14 weg zweimal gegensinnig abgekröpft ist. Die Ausführungsart gemäß Figur 8 enthält einen Stab, der in zwei an dem Lenker 32 befestigten Führungen 58 längsbeweglich getragen ist. Gemäß einer dritten allerdings nicht gezeigten Ausführungsart ist der Lenker 32 länger ausgebildet als der Lenker 30 und stellt somit selbst die Verlängerung 56 dar. Allen Ausführungsarten ist gemein, daß sich die Verlängerung 56 mindestens bis zu dem Hebel 54 erstreckt und gegenüber dem Gestänge 12 bzw. dem Lenker 32 oder gegenüber dem Hebel 54 längsbeweglich ist.

Das Universalgelenk 24' ist bei diesem Ausführungsbeispiel vorzugsweise als Kugelgelenk, bestehend aus einer Kugel 60 und einer Kugelpfanne 62, ausgebildet, und zwar um Reibungsverluste zu vermeiden. Dabei nimmt die Kugel 60 die Verlängerung 56 auf, während die Kugelpfanne 62 von dem Hebel 54 gehalten wird. Während in dem Ausführungsbeispiel gemäß Figur 7 eine Bewegung der Verlängerung 56 in Richtung der Längsachse des Lenkers 32 in bezug auf den Hebel 54 dadurch ermöglicht wird, daß die Verlängerung 56 n der Kugel 60 längsbeweglich geführt ist, wird in dem Ausführungsbeispiel nach Figur 8 die Verlängerung 56 in der Kugel 60 und somit in der Kugelpfanne 62 gehalten; sie kann sich aber in den Führungen 58 bewegen.

Insbesondere in Verbindung mit Figur 4 ist zu erkennen, daß jede Änderung der relativen Lage des Lenkers 32 mit der Verlängerung 56 zu dem Halter 16 und somit zu der Gelenkwelle 40 aufgrund der Anlenkung der Verlängerung 56 an dem Hebel 54 ein Verschwenken der Gelenkwelle 40 und somit des Wischblattes 14 hervorruft. Das Maß der Verstellung ist abhängig von der Länge der Verlängerung 56 und dem Abstand der Kugelpfanne 62 zu der Gelenkwelle 40 und kann somit auch variiert werden.

Handelt es sich bei der zu reinigenden Scheibe 20 um eine konkav gekrümmte Scheibe 20, dann befindet sich der Hebel 54 oberhalb des Halters 16 und steht in einer Schwenkverbindung mit dem Lenker 32 selbst - z. B. in der Art einer Gabel, die den Lenker 32 seitlich übergreift. Die physische Verlängerung 56 würde dann entfallen und wäre nur in der Art einer gedachten "negativen" Verlängerung von dem Lagerpunkt 36 nach oben gesehen vorhanden. Bei einer konvex gekrümmten Scheibe 20, könnte zwar genauso verfahren werden, was die gesamte Scheibenwischeranordnung 10 noch kompakter machen würde; dann müßte aber oberhalb des Lagerpunkts 36 zwischen dem Lenker 32 und dem Hebel 54 ein nicht gezeigtes Umlenkglied vorgesehen werden, das eine umgekehrte Steuerung der Neigung des Wischblatts 14 bewirkt. Ein derartiges Umlenkglied könnte aus einer senkrecht auf den Halter 16 aufgesetzten Achse mit einem zweiarmigen Drehteil bestehen, dessen einer Arm direkt in den Lenker 32 und dessen anderer Arm in dem nun oberhalb der Gelenkwelle 40 vorgesehenen Hebel 54 beweglich eingreift.

In den letztgenannten nicht dargestellten Ausführungsformen wird das Universalgelenk 24' von einer den Lenker 32 übergreifenden Gabel gebildet.

**Patentansprüche**

1. Scheibenwischeranordnung (10) für gekrümmte Flächen mit einem einzigen Wischblatt (14) und einem Gestänge (12), die über einen Halter (16) miteinander verbunden sind, dadurch gekennzeichnet, daß das Wischblatt (14) über ein Gelenk (18) mit einer parallel zur Längsachse des Wischblatts (14) verlaufenden Gelenkwelle (40) an und gegenüber dem Halter (16) schwenkbar angebracht und mittels einer Zwangsführung um die Gelenkwelle (40) in eine radial zur Wischfläche ausgerichtete Ebene schwenkbar ist.

2. Scheibenwischeranordnung nach Anspruch 1, dadurch gekennzeichnet, daß die Gelenkwelle (40) mit dem Wischblatt (14), einem Universalgelenk (24), einem Verbindungsglied (22) und einem ortsfesten Lager (28) drehfest verbunden ist.

3. Scheibenwischeranordnung nach Anspruch 2, dadurch gekennzeichnet, daß das Verbindungsglied (22) an dem Gestänge (12) drehbar gehalten ist.

4. Scheibenwischeranordnung nach Anspruch 2 oder 3, dadurch gekennzeichnet, daß sich das Verbindungsglied (22) parallel oder im wesentlichen parallel zu dem Gestänge (12) erstreckt.

5. Scheibenwischeranordnung nach Anspruch 4, dadurch gekennzeichnet, daß sich zwischen dem Verbindungsglied (22) und dem ortsfesten Lager (28) ein längenveränderliches Steuerglied (26) erstreckt.

6. Scheibenwischeranordnung nach Anspruch 5 dadurch gekennzeichnet, daß das Steuerglied (26) sich stets radial zu dem Verbindungsglied (22) erstreckend angeordnet ist.

7. Scheibenwischeranordnung nach Anspruch 5 oder 6, dadurch gekennzeichnet, daß das Steuerglied (26) elastisch ausgebildet ist.

8. Scheibenwischeranordnung nach Anspruch 5 oder 6, dadurch gekennzeichnet, daß das Steuerglied (26) teleskopartig ausgebildet ist.

9. Scheibenwischeranordnung nach Anspruch 2, dadurch gekennzeichnet, daß das Universalgelenk (24) als Spiralfeder, Kardan- oder Doppelkardangelenk ausgebildet ist, die jeweils einenends an dem Verbindungsglied (22) und anderenends an der Gelenkwelle (40) angreifen.

10. Scheibenwischeranordnung nach Anspruch 2, dadurch gekennzeichnet, daß das Verbindungsglied (22) elastisch ausgebildet ist und als Universalgelenk (24) dient.

11. Scheibenwischeranordnung nach einem oder mehreren der vorherigen Ansprüche, dadurch gekennzeichnet, daß das Gestänge (12) in der Art eines Parallelogramms ausgebildet ist.

12. Scheibenwischeranordnung nach Anspruch 1, dadurch gekennzeichnet, daß das Gestänge (12) als Paralellogrammgestänge ausgebildet ist, und daß die Gelenkwelle (40) mit dem Wischblatt (14) und einem Hebel (54) drehfest und der Hebel (54) über ein Universalgelenk (24') mit dem Gestänge (12) formschlüssig verbunden ist.

13. Scheibenwischeranordnung nach Anspruch 12, dadurch gekennzeichnet, daß das Gestänge (12), insbesondere einer seiner Lenker (32), eine Verlängerung (56) aufweist, die mit dem Universalgelenk (24') schwenkbar verbunden ist.

14. Scheibenwischeranordnung nach Anspruch 13, dadurch gekennzeichnet, daß die Verlängerung (56) in dem Universalgelenk (24') oder an dem Gestänge (12) längsbeweglich geführt ist.

15. Scheibenwischeranordnung nach einem oder mehreren der Ansprüche 12 bis 14, dadurch gekennzeichnet, daß das Universalgelenk (24') aus einer Kugel (60) und einer Kugelpfanne (62) besteht.

16. Scheibenwischeranordnung nach Anspruch 12, dadurch gekennzeichnet, daß der Hebel (54) über ein Umlenkglied mit dem Gestänge (12) verbunden ist.

**Claims**

1. Windscreen wiper arrangement (10) for curved surfaces with a single wiper blade (14) and an arm (12), which are connected together by a holder (16), characterized in that the wiper blade (14) is fitted on the holder (16) and pivotally relative thereto by a hinge (18) with a hinge pin (40) running parallel to longitudinal axis of the wiper blade (14) and is pivotal about the hinge pin (40) by means of a constraining guide action into a plane aligned radially with respect to the wiper surface.

2. Windscreen wiper arrangement according to claim 1, characterized in that the hinge pin (40) with the wiper blade (14) is connected fast against rotation to a universal joint (24), a connecting member (22) and a pivot point (28) in a fixed position.

3. Windscreen wiper arrangement according to claim 2, characterized in that the connecting member (22) is rotatably attached to the arm (12).

4. Windscreen wiper arrangement according to claim 2 or 3, characterized in that the connecting member (22) extends parallel or substantially parallel to the arm (12).

5. Windscreen wiper arrangement according to claim 4, characterized in that a control member (26) of variable length extends between the connecting member (22) and the pivot point (28) in the fixed position.

6. Windscreen wiper arrangement according to claim 5, characterized in that the control member (26) is arranged extending always radially with respect to the connecting member (22).

7. Windscreen wiper arrangement according to claim 5 or 6, characterized in that the control member (26) is formed elastically.

8. Windscreen wiper arrangement according to claim 5 or 6, characterized in that the control member (26) is formed telescopically.

9. Windscreen wiper arrangement according to claim 2, characterized in that the universal joint (24) is formed as a helical spring, Cardan joint or double Cardan joint, which engages in each case with the connecting member (22) at one end and with the hinge pin (40) at the other end.

10. Windscreen wiper arrangement according to claim 2, characterized in that the connecting member (22) is formed elastically and serves as a universal joint (24).

11. Windscreen wiper arrangement according to one or more of the preceding claims, characterized in that the arm (12) is formed in the manner of a parallelogram.

12. Windscreen wiper arrangement according to claim 1, characterized in that the arm (12) is formed as a parallelogram linkage and in that the hinge pin (40) is connected fast against rotation to the wiper blade (14) and to a lever (54) and the lever is connected in interlocking manner to the arm (12) through a universal joint (24').

13. Windscreen wiper arrangement according to claim 12, characterized in that the arm (12), in particular one of its links (32), has an extension (56) which is pivotally connected to the universal joint (24').

14. Windscreen wiper arrangement according to claim 13, characterized in that the extension (56) is guided longitudinally movably in the universal joint (24') or on the arm (12).

15. Windscreen wiper arrangement according to one or more of claims 12 to 14, characterized in that the universal joint (24') consists of a ball (60) and a ball socket (62).

16. Windscreen wiper arrangement according to claim 12, characterized in that the lever (54) is connected to the arm (12) by a direction changing member.

**Revendications**

1. Dispositif essuie-glace (10) pour des surfaces cintrées, comportant une seule lame essuie-glace (14) et une tringlerie (12), qui sont reliées entre elles au moyen d'un support (16), caractérisé en ce que la lame essuie-glace (14) est montée sur le support (16), au moyen d'une articulation (18) comportant un arbre de transmission (40) disposé parallèlement à l'axe longitudinal de la lame essuie-glace (14), de manière à pouvoir pivoter par rapport au support (16), et en ce qu'elle peut pivoter, au moyen d'un guidage forcé, autour de l'arbre de transmission (40), dans un plan aligné radialement par rapport à la surface balayée.

2. Dispositif essuie-glace selon la revendication 1, caractérisé en ce que l'arbre de transmission (40) est relié de façon résistante à la torsion à la lame essuie-glace (14), à un joint articulé (24), à un élément d'assemblage (22) et à un palier fixe (28).

3. Dispositif essuie-glace selon la revendication 2, caractérisé en ce que l'élément d'assemblage (22) est monté mobile sur la tringlerie (12).

4. Dispositif essuie-glace selon la revendication 2 ou 3, caractérisé en ce que l'élément d'assemblage (22) s'étend parallèlement ou sensiblement parallèlement à la tringlerie (12).

5. Dispositif essuie-glace selon la revendication 4, caractérisé en ce qu'un élément de commande (26) réglable en longueur s'étend entre l'élément d'assemblage (22) et le palier fixe (28).

6. Dispositif essuie-glace selon la revendication 5, caractérisé en ce que l'élément de commande (26) est disposé de façon à s'étendre toujours radialement par rapport à l'élément d'assemblage (22).

7. Dispositif essuie-glace selon la revendication 5 ou 6, caractérisé en ce que l'élément de commande (26) est réalisé de façon élastique.

8. Dispositif essuie-glace selon la revendication 5 ou 6, caractérisé en ce que l'élément de commande (26) est réalisé de façon télescopique.

9. Dispositif essuie-glace selon la revendication 2, caractérisé en ce que le joint articulé (24) est réalisé en forme de ressort spiral, de joint de cardan ou de double cardan, dont une extrémité agit sur l'élément d'assemblage (22) et dont l'autre extrémité agit sur l'arbre de transmission (40).

10. Dispositif essuie-glace selon la revendication 2, caractérisé en ce que l'élément d'assemblage (22) est réalisé de façon élastique et sert de joint articulé (24).

11. Dispositif essuie-glace selon une ou plusieurs des revendications précédentes, caractérisé en ce que la tringlerie (12) est réalisée sous la forme d'un parallélogramme.

12. Dispositif essuie-glace selon la revendication 1, caractérisé en ce que la tringlerie (12) est réalisée sous la forme d'un parallélogramme et en ce que l'arbre de transmission (40) est relié de façon résistante à la torsion à la lame essuie-glace (14) et à un levier (54), et le levier (54) est relié à la tringlerie (12), par blocage, au moyen d'un joint articulé (24').

13. Dispositif essuie-glace selon la revendication 12, caractérisé en ce que la tringlerie (12), en particulier un de ses bras oscillants (32), présente un prolongement (56) qui est relié au joint articulé (24') de manière pivotante.

14. Dispositif essuie-glace selon la revendication 13, caractérisé en ce que le prolongement (56) est guidé dans le joint articulé (24') ou sur la tringlerie (12) de manière à pouvoir s'y déplacer longitudinalement.

15. Dispositif essuie-glace selon une ou plusieurs des revendications 12 à 14, caractérisé en ce que le joint articulé (24') est formé d'une rotule (60) et d'un coussinet sphérique (62).

16. Dispositif essuie-glace selon la revendication 12, caractérisé en ce que le levier (54) est relié à la tringlerie (12) au moyen d'un élément de renvoi.

FIG. 1

52  26  28

50

12  32

14

10

24

20

16

40  44

FIG. 3

18

48  20

14

FIG. 4

FIG. 2

FIG. 5

FIG. 6

EP 0 317 767 B1

FIG. 7

12

FIG.8

58

32

56

18

42

58

44

24'

36

40

60

16

38

62

54

42

14

46